# EUROPEAN PATENT SPECIFICATION

(11) **EP 2 479 822 B1**
(45) Date of publication and mention of the grant of the patent: **13.11.2013**
(21) Application number: 12151461.6
(22) Date of filing: 17.01.2012
(51) Int. Cl.: H01M 4/136, H01M 4/62, H01M 4/1397, H01M 10/052

(54) **Electrode for lithium secondary battery and lithium secondary battery including the same**
Elektrode für eine Lithiumsekundärbatterie und Lithiumsekundärbatterie damit
Électrode pour batterie secondaire au lithium et batterie secondaire au lithium l'incluant

(30) Priority: 20.01.2011 US 201161434775 P; 24.09.2011 US 201113244450; 13.10.2011 KR 20110104822
(43) Date of publication of application: 25.07.2012
(73) Proprietor: Samsung SDI Co., Ltd., Gyeonggi-do (KR)
(72) Inventor: Cho, Chae-Woong, Gyeonggi-do (KR); Jang, Woon-Suk, Gyeonggi-do (KR); Chang, Bum-Jin, Gyeonggi-do (KR); Kim, Ki-Jun, Gyeonggi-do (KR); Choi, Kwi-Seok, Gyeonggi-do (KR); Lee, Maeng-Eun, Gyeonggi-do (KR)
(74) Representative: Mounteney, Simon James

(56) References cited:
- EP-A2- 2 383 828
- WO-A1-2007/083874
- US-A1- 2006 235 144

## Description

### [Technical Field of the Invention]

The present invention relates to electrodes for lithium secondary batteries and lithium secondary batteries including the same.

### [Related Art prior to the Invention]

Recently, lithium secondary batteries are being used as power sources for portable compact electronic devices. Lithium secondary batteries have high energy density because they use organic electrolytes, and thus the discharge voltage of the lithium secondary batteries is at least two times greater than that of batteries using conventional alkali aqueous electrolyte solutions.

In lithium secondary batteries, materials capable of intercalating and deintercalating lithium ions are used in the negative electrode and the positive electrode, and an organic electrolytic solution or a polymer electrolytic solution fills the space between the positive electrode and negative electrode. When lithium ions are intercalated or deintercalated, an oxidation reaction and a reduction reaction occur, respectively, and due to the oxidation reaction and the reduction reaction, electric energy is generated.

In order to prepare positive electrodes for lithium secondary batteries, a positive active material, a conductive agent, a binder, and a solvent are mixed and dispersed to prepare slurry and then the slurry is coated and dried on a current collector.

The binder may be polyvinylidenefluoride, etc.

However, when conventional binders are used, the binding force between a current collector and an active material, the workability of slurry with respect to a current collector, and the performance of batteries are unsatisfactory.

### [Description of the Invention]

According to one or more embodiments of the present invention, an electrode for lithium secondary batteries having improved high-rate characteristics, lifetime characteristics, and interior resistance characteristics according to claim 1 is provided.

According to other embodiments, a lithium secondary battery including the electrode according to claim 15 is provided. Various preferred features of the invention are set out in the dependent claims.

According to one or more embodiments of the present invention, an electrode for lithium secondary batteries comprising an electrode active material and at least one polyurethane-based compound, wherein the electrode comprises pores having an average diameter of from 2 to 20 nm.

According to one or more embodiments of the present invention, a lithium secondary battery including the electrode is provided.

Electrodes for lithium secondary batteries according to one or more embodiments of the present invention have good high-rate characteristics, good interior resistance characteristics, and good lifetime characteristics due to their small average pore diameter in an active material layer.

### [Brief Description of the Drawings]

FIG. 1 is a cross-sectional schematic view of a lithium secondary battery according to an embodiment of the present invention.
FIG. 2 is a graph showing viscosity analysis results of compositions for forming a positive active material layer prepared according to Examples 1 through 3 and Comparative Example 1.
FIG. 3 is a graph showing high-rate discharge characteristics of lithium secondary batteries manufactured according to Examples 1 through 3 and Comparative Example 1.
FIG. 4 is a graph showing interior resistance characteristics of lithium secondary batteries manufactured according to Examples 1 through 3 and Comparative Example 1.
FIG. 5 is a graph showing lifetime characteristics of lithium secondary batteries manufactured according to Examples 1 through 3 and Comparative Example 1.

### [Detailed Description of the Invention]

An electrode for lithium secondary batteries according to the present invention as defined in claim 1 includes an electrode active material and at least one polyurethane-based compound according to claim 1, wherein the electrode comprises pores having an average pore diameter of from 2 to 20 nm.

By the term "average pore diameter" it is meant fourfold the specific pore volume divided by the specific surface area, based on the assumption of uniform cylindrical pores.

In one embodiment of the present invention, the electrode comprises a positive active material. In an alternative embodiment, the electrode comprises a negative active material.

The polyurethane-based compound is preferably a polymerization product of a polyurethane-based compound forming composition that includes a diisocyanate-based compound and polyol. If the polyurethane-based compound is used when an electrode active material layer is formed, a component of an active material layer, for example, a conductive agent is well dispersed and thus viscosity of a composition for forming the electrode active material layer is appropriately controlled. Thus, the composition for forming the electrode active material layer may be easily coated on to a current collector. Also, an electrode and a battery manufactured using the polyurethane-based compound may have high stability and good lifetime characteristics.

The diisocyanate-based compound may be an aliphatic diisocyanate-based compound, an alicyclic diisocyanate compound or an aromatic diisocyanate-based compound.

Nonlimiting examples of an aliphatic diisocyanate-based compound include compounds represented by the following formulae:

O=C=N-R¹-N=C=O

in which R¹ is a substituted or unsubstituted straight-chain C₂₋₁₂ aliphatic hydrocarbon group, or a substituted or unsubstituted branched C₂₋₁₂ aliphatic hydrocarbon group. Preferably, R¹ is a substituted or unsubstituted C₄₋₈ aliphatic hydrocarbon group, preferably hexamethylene diisocyanate.

Nonlimiting examples of an alicyclic diisocyanate-based compound include compounds represented by the following formulae:

O=C=N-R²-N=C=O

in which R² is a substituted or unsubstituted alicyclic hydrocarbon group with from 5 to 20 carbon atoms;

For the substituted straight-chain aliphatic hydrocarbon group, substituted branched aliphatic hydrocarbon group, and substituted alicyclic hydrocarbon group, at least one hydrogen atom of the respective hydrocarbon group may be substituted by one or more groups selected from the group consisting of a halogen atom; a C₁-C₂₀ alkyl group substituted with a halogen atom, preferably a -CCF₃, -CHCF₂, CH₂F or -CCl₃ group; a C₁-C₂₀ alkoxy group; a C₂-C₂₀ alkoxyalkyl group; a hydroxy group; a nitro group; a cyano group; an amino group; an amidino group; a hydrazine group; a hydrazone group; a carboxyl group or salt thereof; a sulfonyl group; a sulfamoyl group; a sulfonic acid group or salt thereof; a phosphoric acid group or salt thereof; a C₁-C₂₀ alkyl group; a C₂-C₂₀ alkenyl group; a C₂-C₂₀ alkynyl group; a C₁-C₂₀ heteroalkyl group; a C₆-C₂₀ aryl group; a C₆-C₂₀ arylalkyl group; a C₆-C₂₀ heteroaryl group; a C₇-C₂₀ heteroarylalkyl group; a C₆-C₂₀ heteroaryloxy group; a C₆-C₂₀ heteroaryloxyalkyl group; or a C₆-C₂₀ heteroarylalkyl group.

Preferably, between one and five hydrogen atoms are replaced by the above groups, more preferably between one and three. Preferably, the substituent is selected from the group consisting of a halogen atom; a C₁-C₂₀ alkyl group substituted with a halogen atom, preferably a -CCF₃, -CHCF₂, CH₂F or -CCl₃ group; a C₁-C₂₀ alkoxy group; a hydroxy group; a carboxyl group or salt thereof; a C₁-C₂₀ alkyl group; a C₆-C₂₀ aryl group; and a C₆-C₂₀ heteroaryl group.

Preferred examples of the alicyclic diisocyanate-based compound include compounds represented by the following formulae:

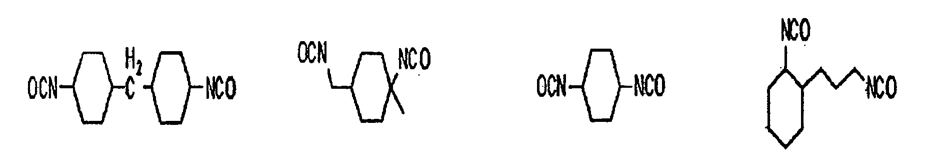

Nonlimiting examples of an aromatic diisocyanate-based compound include compounds represented by the following formulae:

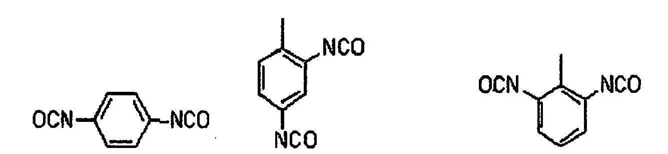

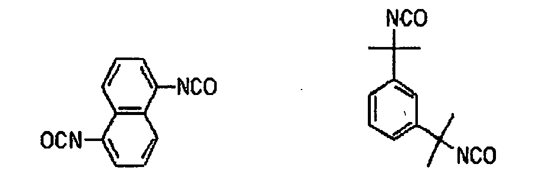

Preferably, the at least one polyol has between 1 and 10 carbon atoms and between 2 and 6 hydroxyl groups, preferably between 1 and 6 carbon atoms and between 2 and 4 hydroxyl groups. In preferred embodiments of the present invention the polyol may be a C₁₋₅ -diol, -triol or tetraol, preferably a C₂₋₄ diol.

The polyurethane-based compound may be prepared as follows: an isocyanate-based compound (preferably a diisocyanate), at least one alcohol compound (preferably a polyol), and a solvent are mixed to prepare a polyurethane prepolymer and then the polyurethane prepolymer is polymerized to produce the polyurethane-based compound.

For example, a mixture including an isocyanate-based compound, an alcohol compound, and a solvent undergoes a polymerization and condensation reaction at a temperature of -10 to 25° C to produce a corresponding polyurethane prepolymer. Within the temperature range, the yield of the polymerization and condensation reaction is high.

Then, a catalyst is added to the polyurethane prepolymer and then a heat treatment is performed thereon at a temperature of 80 to 130° C to perform a polymerization reaction, thereby producing a polyurethane-based compound.

If the polymerization temperature is within the range described above, the yield of the polyurethane-based compound is high.

The catalyst may be dibutyltin laurate or 4-diazabicyclo[2,2,2]-octane. An amount of the catalyst may be in a range of 10⁻⁵ to 10⁻² mol, for example, 10⁻⁴ to 10⁻² mol, based on 1 mol of the diisocyanate-based compound.

If the amount of the catalyst is within the range described above, reactivity of the polymerization reaction is high.

The solvent may be dimethylacetamide or dimethylformamide.

An amount of the solvent may be 80 to 120 parts by weight based on 100 parts by weight of the diisocyanate-based compound.

The polyurethane-based compound according to an embodiment of the present invention may have a weight average molecular weight of 5,000 to 20,000 g/mol. The polyurethane-based compound may be, for example, a compound represented by Formula 1 or Formula 2 below:

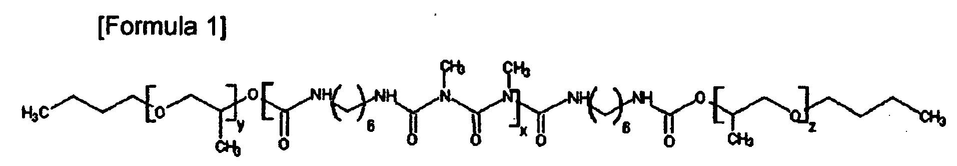

in Formula 1, x is an integer of 1 to 100, preferably between 10 and 40, more preferably between 15 and 35;
y is an integer of 1 to 100, preferably between 5 and 30, more preferably between 10 and 25; and
z is an integer of 1 to 100, preferably between 5 and 20, more preferably between 7 and 15; and

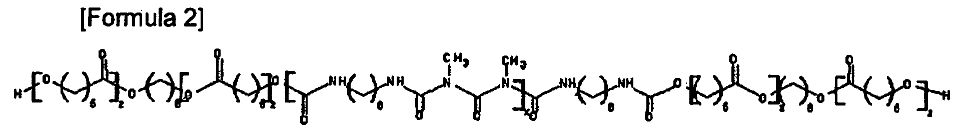

In Formula 2, x is an integer of 1 to 100, preferably between 10 and 40, more preferably between 15 and 35; and
z is an integer of 1 to 100 preferably between 5 and 20, more preferably between 7 and 15.

For example, in Formula 1, x is 30, y is 15, and z is 10, and in Formula 2, x is 20 and z is 10.

In the electrode, an amount of the polyurethane-based compound may be 1 to 50 parts by weight, 5 to 50 parts by weight, 10 to 50 parts by weight, for example, 10 to 30 parts by weight based on 100 parts by weight of the conductive agent.

If the amount of the polyurethane-based compound is within the range described above, a viscosity of a composition for forming an electrode active material layer may be reduced and an amount of a solid content in the electrode active material layer may be increased and thus an electrode manufactured using the polyurethane-based compound may have excellent capacity characteristics.

The viscosity of the electrode active material layer forming composition including the polyurethane-based compound may differ according to the kind or amount of a conductive agent, a binder, a solvent, etc. According to an embodiment of the present invention, the viscosity of the electrode active material layer forming composition may be 3 to 16 Pa·s, preferably 6 to 14 Pa·s, for example, 6.46 to13.91 Pa·s. All viscosities recited in the present application are measured at room temperature, preferably between 20 and 25°C, preferably at 22.5°C.

The electrode active material layer forming composition may be, for example, a composition for forming a positive active material layer or a negative active material layer.

An amount of the polyurethane-based compound may be 0.1 to 5 parts by weight based on 100 parts by weight of the positive or negative active material, for example, 0.4 to 3 parts by weight and 0.5 to 2 parts by weight. If the amount of the polyurethane-based compound is within the range described above, the conductive agent, if present, may be uniformly dispersed in the electrode and thus the viscosity of the composition for forming an active material layer may be appropriately controlled and thus an electrode manufacturing using the composition may have high capacity.

The electrodes of the present invention preferably further comprise a conductive agent. The conductive agent may be any conducting material that does not cause chemical changes in batteries. Nonlimiting examples of the conducting agent include graphite, such as natural graphite or artificial graphite; carbonaceous materials, such as carbon black, acetylene black, ketjen black, channel black, furnace black, lamp black, or summer black; conducting fibers, such as carbonaceous fibers or metal fibers; metal powder, such as carbon fluoride powders, aluminum powders, or nickel powders; conducting whiskers, such as zinc oxide or potassium titanate; and conducting metal oxides such as a titanium oxide; and conducting materials such as polyphenylene derivatives.

An amount of the conductive agent may be 1 to 10 parts by weight, preferably 3 to 8 parts by weight, based on 100 parts by weight of the positive or negative active material. If the amount of the conductive agent is within the range described above, an electrode manufactured using the conductive agent may have good conductivity.

The positive active material may not be particularly limited, and may be, for example, a lithium metal phosphate-based compound represented by Formula 3 below:

[Formula 3] LiMPO₄

In Formula 3, M is a metal selected from the group consisting of Fe, Ti, V, Cr, Co, and Ni.

Also, a coating layer including at least one material selected from the group consisting of metal oxynitrides, metal nitrides, and a mixture thereof may be formed on the surface of the lithium metal phosphate-based compound. If the coating layer is formed as described above, due to inclusion of highly conductive carbon, metal oxynitrides, and/or metal nitrides, the electric capacity of a battery may be increased, the amount of the conductive agent present may be reduced, and density of the electrode and high-rate discharge characteristics of a battery may be improved.

The metal oxynitrides may be represented by Formula 4 below:

[Formula 4] MOₓN_{y}

In Formula 4, 0<x<2 and 0<y<1, and M is Ti, V, Mo, or Ta, for example,
Ti, V, or Mo.

The metal nitrides may be represented by Formula 5:

[Formula 5] MN_{z}

In Formula 5, 0<z≤1 and M is Ti, V, Mo, or Ta, for example, Ti, V, or Mo.

According to an embodiment of the present invention, the lithium metal phosphate-based compound may be coated with carbon in order to improve conductivity. The carbon-coated lithium metal phosphate-based compound may be obtained by heat treating a mixture including a lithium metal phosphate-based compound precursor and a carbon precursor. In general, the carbon precursor may be a hydrocarbon compound. However, the carbon precursor may be any material that is transformed into carbon by carbonization and is available in the art. An amount of the coated carbon may be 0.1 to 10 wt% based on the total weight of the positive active material. However, the amount of the coated carbon may differ according to purpose.

The positive active material for lithium secondary batteries may further include a lithium transition metal oxide that is conventionally used in a lithium secondary battery.

The lithium transition metal active material may include at least one selected from the group consisting of LiCoO₂, LiNiO₂, LiMnO₂, LiMn₂O₄, Li(NiₐCo_{b}Mn_{c})O₂(0<a<1, 0<b<1, 0<c<1, a+b+c=1), LiNi_{1-Y}Co_{Y}O₂, LiCo_{1-Y}Mn_{Y}O₂, LiNi_{1-Y}Mn_{Y}O₂ (0≤Y<1), LiMn_{2-z}Ni_{z}O₄, LiMn_{2-z}Co_{z}O₄(0<Z<2), LiCoPO₄, and LiFePO₄.

According to an embodiment of the present invention, the lithium transition metal oxide may be, for example, LiCoO₂.

An amount of the lithium transition metal oxide may be 01. to 100 parts by weight, preferably 0.1 to 90 parts by weight, based on 100 parts by weight of the total weight of the positive active material.

If the amount of the lithium transition metal oxide is within the range described above, the positive active material has good capacity characteristics.

Nonlimiting examples of the negative active material include carbonaceous materials, such as graphite or carbon, lithium metal, alloys thereof, and silicon oxides, which intercalate or deintercalate lithium ions. According to an embodiment of the present invention, the negative active material may be silicon oxide.

The electrode of the present invention may preferably comprise a binder. The binder is a component that enhances the binding of an active material to a conductive agent or a current collector, and an amount of the binder may be 1 to 10 parts by weight, preferably 1.5 to 5 parts by weight, based on 100 parts by weight of the total weight of the positive active or negative active material. If the amount of the binder is within the range described above, a binding force between an active material layer and a current collector may be high.

Nonlimiting examples of the binder are polyvinylidenefluoride, polyvinylalcohol, carboxymethylcellulose(CMC), starch, hydroxypropylcellulose, regenerated cellulose, polyvinylpyrrolidone, tetrafluoroethylene, polyethylene, polypropylene, ethylene-propylene-diene ter polymerterpolymer (EPDM), sulfonated EPDM, styrene butadiene rubber, fluoro rubber, and vinylidenefluoride copolymer having at least one functional group selected from the group consisting of a carboxyl group, an epoxy group, a hydroxyl group, and a carbonyl group.

According to an embodiment of the present invention, the binder includes the conventional binder described above (hereinafter referred to as "first binder") and a vinylidenefluoride polymer having a functional group (hereinafter referred to as "second binder").

An amount of the second binder may be 2 to 40 parts by weight, for example, 2 to 20 parts by weight or 3 to 10 parts by weight, based on 100 parts by weight of the total weight of the binder.

If the amount of the second binder is within the range described above, a binding force of the active material with respect to the current collector may be further enhanced, and an electrode and a battery manufactured using the binder may have long lifetime and stability.

The first binder may be, for example, polyvinylidenefluoride.

The functional group may include at least one selected from the group consisting of a carboxyl group, an epoxy group, a hydroxyl group, and a carbonyl group.

In the vinylidenefluoride polymer having the functional group, an amount of the functional group may be 1×10⁻⁵ to 5×10⁻⁴ mol/g, preferably 5×10⁻⁵ to 3×10⁻⁴ mol/g, more preferably 1×10⁻⁴ to 2×10⁻⁴ mol/g.

According to an embodiment of the present invention, the vinylidenefluoride polymer having the functional group may be a vinylidenefluoride polymer substituted with a carboxyl group.

The vinylidenefluoride polymer including a carboxyl group may be, for example, a carboxyl group-containing vinylidenefluoride copolymer prepared by copolymerizing a first monomer for forming a vinylidenefluoride polymer and a second monomer selected from the group consisting of an unsaturated monobasic acid, an unsaturated dibasic acid, and an alkyl ester thereof.

The amount of the second monomer is preferably 0.1 to 3 parts by weight, based on 100 parts by weight of the first monomer.

One nonlimiting example of the unsaturated monobasic acid is an acrylic acid, and one nonlimiting example of the unsaturated dibasic acid is a maleic acid.

The vinylidenefluoride polymer containing a carboxyl group may be a vinylidene fluoride-hexafluoropropylene-acrylic acid copolymer (e.g. KF9300, which is commercially available and is manufactured by Kureha Chemical Industry Co., Ltd.).

In the vinylidenefluoride polymer containing a carboxyl group, an amount of a carbonyl group may be, for example, 1×10⁻⁵ to 5×10⁻⁴ mol/g. In this case, the amount of the functional group may be measured by using a method of measuring an amount of a carbonyl group disclosed in US 5,415,958 (lines 17-36, column 8).

Hereinafter, a method of manufacturing a lithium secondary battery according to an embodiment of the present invention will be described in detail.

The present invention provides batteries where either one of or both of the positive and negative electrodes comprise at least one polyurethane-based compound as defined above.

In a preferred embodiment, the lithium secondary battery includes, for example, a positive electrode, a negative electrode, a lithium salt-containing non-aqueous electrolyte, and a separator. First, an electrode active material, optionally a conductive agent, a polyurethane-based compound, and a solvent are mixed to prepare a composition for forming an active material layer, and the mixture is coated and dried on a current collector to manufacture a positive electrode. Preferably, the electrode active material is a positive active material. Preferably, a positive active material, a conductive agent, a binder, a polyurethane-based compound, and a solvent are mixed to prepare a composition for forming a positive active material layer, and the mixture is coated and dried on a current collector to manufacture a positive electrode.

One nonlimiting example of the solvent is N-methylpyrrolidone.

An amount of the solvent may be 1 to 500 parts by weight, for example, 1 to 50 parts by weight, based on 140 parts by weight of the positive electrode active material. If the amount of the solvent is within the range described above, the positive active material layer may be easily formed.

The current collector used to form the positive electrode may have a thickness of about 3 to about 500 µm, and may be formed using any material that does not cause chemical changes in batteries and has high conductivity. The collector may be formed of stainless steel, aluminum, nickel, titanium, heat treated carbon, or aluminum. Alternatively, the collector may be a stainless steel support that is surface-treated with carbon, nickel, titanium, or silver. The collector may have a corrugated surface to facilitate a stronger attachment of the positive electrode active material to the collector. The collector may take various forms, such as a film, a sheet, a foil, a net, a porous product, a foam, or a nonwoven fabric.

The electrode, preferably a positive electrode, may have pores having an average diameter of from 2 to 20 nm, preferably of 5 to 15 nm, for example, 5 nm, 8 nm or 15 nm.

If the average diameter of the pores is within the range described above, an electrode manufactured using the positive electrode may have good high-rate characteristics, long lifetime, and good interior resistance characteristics.

In the electrode, preferably a positive electrode, a pore volume may be in 30 to 35 X 10⁻³ cm³/g, for example, 32 to 33 X 10⁻³ cm³/g.

The average diameter of the pores and the pore volume may be measured by using a B.E.T. (Brunauer Emmett Teller) method.

An electrode having pores with the average diameter range described above and the pore volume described above may have high uniformity and electrode density characteristics.

If the electrode of the present invention comprises a positive active material, separately, a negative active material, a binder, preferably a conductive agent, and a solvent are mixed to prepare a composition for forming a negative active material layer.

Nonlimiting examples of the negative active material include carbonaceous materials, such as graphite or carbon, lithium metal, alloys thereof, and silicon oxides, which intercalate or deintercalate lithium ions. According to an embodiment of the present invention, the negative active material may be silicon oxide.

An amount of the binder may be about 1 to about 10 parts by weight based on 100 parts by weight of the total weight of the negative active material. Nonlimiting examples of the binder include those described above.

An amount of the conductive agent, if present, may preferably be about 1 to about 10 parts by weight based on 100 parts by weight of the total weight of the negative active material. If the amount of the conducting agent is inside the range described above, the resultant electrode has high conductivity.

An amount of the solvent may be about 1 to about 10 parts by weight based on 100 parts by weight of the total weight of the negative active material. If the amount of the solvent is within the range described above, a negative active material layer may be easily formed.

Nonlimiting examples of the conductive agent and the solvent include those described above.

A current collector that is used to manufacture the negative electrode may have a thickness of 3 to 500 µm, in general. The current collector used to form the negative electrode may be formed using any material that does not cause chemical changes in batteries and has high conductivity. The collector may be formed of copper, stainless steel, aluminum, nickel, titanium, or heat treated carbon. Alternatively, the collector may be a copper or stainless steel support that is surface-treated with carbon, nickel, titanium, or silver, or an aluminum-cadmium alloy. Like the positive electrode current collector, the collector may have a corrugated surface to facilitate a stronger attachment of the negative electrode active material to the collector. The collector may take various forms, such as a film, a sheet, a foil, a net, a porous product, a foam, or a nonwoven fabric.

A separator is placed between the positive electrode and the negative electrode manufactured as described above.

The separator may have an average pore diameter of about 0.01 to about 10 µm, and a thickness of about 5 to about 300 µm. The separator may be a sheet or a nonwoven fabric formed of an olefin-based polymer such as polypropylene or polyethylene, or glass fiber. If the electrolyte used is a solid electrolyte such as a polymer, the solid electrolyte may also act as the separator. The lithium salt-containing non-aqueous electrolyte may include a non-aqueous electrolyte and a lithium salt. The non-aqueous electrolyte may be a non-aqueous electrolytic solution, an organic solid electrolyte, or an inorganic solid electrolyte.

Nonlimiting examples of the non-aqueous electrolytic solution include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxy ethane, 2-methyl tetrahydrofuran, dimethylsulfoxide, 1,3-dioxolane, formamide, dimethyl formamide, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, or ethyl propionate.

Nonlimiting examples of the organic solid electrolyte include polyethylene derivatives, polyethylene oxide derivatives, polypropylene oxide derivatives, phosphate ester polymers, polyester sulfide, polyvinyl alcohol, and polyvinylidene fluoride.

Nonlimiting examples of the inorganic solid electrolyte include nitrides, halides, and sulfides of lithium, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂.

The lithium salt may be a material that is easily dissolved in the non-aqueous electrolyte, and may be, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, or (CF₃SO₂)₂NLi.

In another embodiment of the present invention, the above-mentioned method for producing a positive electrode may be used to produce an electrode comprising a negative active material according to the present invention. Preferably, a negative active material, optionally a conductive agent, a binder, a polyurethane-based compound, and a solvent are mixed to prepare a composition for forming a negative active material layer, and the mixture is coated and dried on a current collector to manufacture a negative electrode.

A battery according to the present invention comprising said negative electrode may preferably include a positive electrode as produced above (i.e. comprising a polyurethane-based compound). In an alternative embodiment the polyurethane-based compound may be omitted from the positive electrode, i.e. it is only the negative electrode that comprises a polyurethane-based compound.

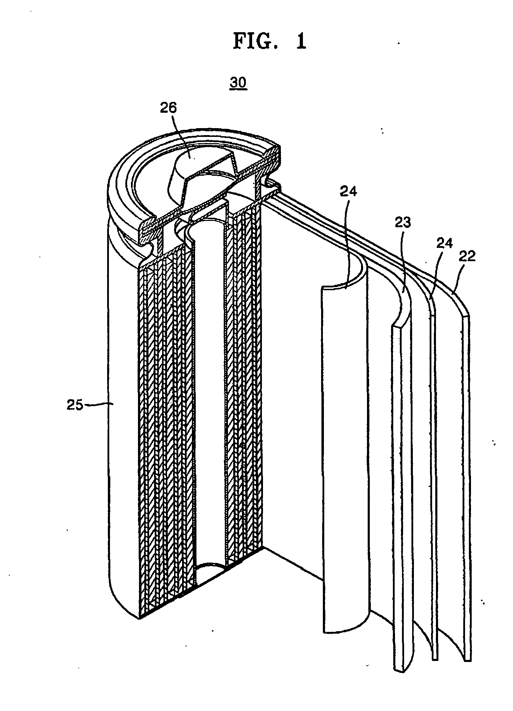

FIG. 1 is a cross-sectional schematic view of a lithium secondary battery 30 according to an embodiment of the present invention.

Referring to FIG. 1, the lithium battery 30 includes a positive electrode 23, a negative electrode 22, a separator 24 between the positive electrode 23 and the negative electrode 22, a battery case 25, and a sealing member 26 for sealing the battery case 25. The positive electrode 23, the negative electrode 22, and the separator 24 are impregnated with an electrolyte (not shown). The lithium battery 30 is formed by sequentially stacking the positive electrode 23, the separator 24, and the negative electrode 22 and then winding the stack structure to form an electrode assembly which is placed in the battery case 25. The battery case 25 is then sealed with the sealing member 26.

The following examples are presented for illustrative purposes only and do not limit the purpose and scope of the present invention.

### Example 1: Preparation of positive electrode and lithium secondary battery including the positive electrode

36 g of LiFePO₄ as a positive active material, 0.15 g of polyvinylidenefluoride substituted with a carboxyl group (an amount of carbonyl group: about 1.2×10⁻⁴ mole/g), 2 g of polyvinylidenefluoride, 2 g of carbon black, and 0.2 g of polyurethane-based compound (x=30, y=15, z=10) (weight average molecular weight: about 10,000) represented by Formula 1 were dispersed in 60 g of N-methypyrrolidone to prepare a composition for forming a positive active material layer.

The composition for forming a positive active material layer was coated on an aluminum foil to form a film having a thickness of 60 µm, thereby preparing a thin electrode plate, and then the thin electrode plate was dried at a temperature of 135° C for at least three hours and then subjected to pressing, thereby completing a positive electrode.

Separately, a negative electrode was manufactured as follows.

Silicon oxide and polyvinylidene fluoride were mixed in a weight ratio of 96:4 in N-methypyrrolidone to prepare a composition for forming a negative active material layer. The composition for forming a negative active material layer was coated on a copper foil to form a film having a thickness of 14 µm, thereby preparing a thin electrode plate, and then, the thin electrode plate was dried at a temperature of 135° C for at least three hours and then subjected to pressing, thereby completing a negative electrode.

In order to prepare an electrolyte, ethylene carbonate (EC), ethylmethyl carbonate (EMC), and dimethylcarbonate (DMC) were mixed in a volumetric ratio of 1:1:1 and then 1.3M LiPF₆ was added to the mixed solvent.

A porous polyethylene (PE) film as a separator was placed between the positive electrode and the negative electrode prepared as described above to prepare a battery assembly, and the battery assembly was wound and pressed and placed in a battery case. Then, the electrolyte was loaded into the battery case to complete manufacturing of a lithium secondary battery having a capacity of 2600 mAh (9360 C).

### Example 2: Preparation of positive electrode and lithium secondary battery_ including the positive electrode

A lithium secondary battery was manufactured in the same manner as in Example 1, except that the amount of the polyurethane-based compound represented by Formula 1 was 0.4 g.

### Example 3: Preparation of positive electrode and lithium secondary battery including the positive electrode

A lithium secondary battery was manufactured in the same manner as in Example 1, except that the amount of the polyurethane-based compound represented by Formula 1 was 0.6 g.

### Comparative Example 1: Peparation of positive electrode and lithium secondary battery including the positive electrode

A lithium secondary battery was manufactured in the same manner as in Example 1, except that 0.2 g of the polyurethane-based compound represented by Formula 1 was not used.

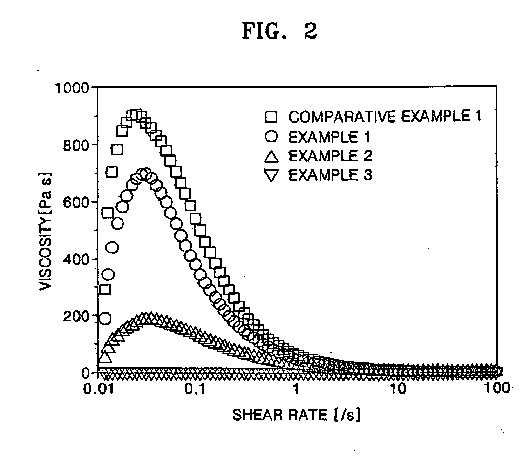

Viscosity of the positive active material layer forming compositions prepared according to Examples 1 through 3 and Comparative Example 1 was measured and the results are shown in FIG. 2 and Table 1 below.

**Table 1**

| | Viscosity (shear rate=4/s) |
|---|---|
| Example 1 | 13.91 |
| Example 2 | 7.09 |
| Example 3 | 6.46 |
| Comparative Example 1 | 17.76 |

Referring to Table 1 and FIG. 2, it is confirmed that the positive active material layer forming compositions prepared according to Examples 1 through 3 have lower levels of viscosity than the positive active material layer forming composition prepared according to Comparative Example 1.

Since the positive active material layer forming compositions prepared according to Examples 1 through 3 have lower viscosity than the positive active material layer forming composition prepared according to Comparative Example 1, the positive active material layer forming compositions prepared according to Examples 1 through 3 are more easily coated on to an electrode than the positive active material layer forming composition prepared according to Comparative Example 1.

In the lithium secondary batteries manufactured according to Examples 1 through 3 and Comparative Example 1, an average diameter of pores of a positive electrode was measured and the results are shown in Table 2 below. In this case, an average diameter of pores was measured by using a B.E.T. method.

**Table 2**

| | Average diameter of pores (nm) |
|---|---|
| Example 1 | 15 |
| Example 2 | 8 |
| Example 3 | 5 |
| Comparative Example 1 | 21.5 |

Regarding the positive active material layer forming compositions prepared according to Examples 1 through 3 and Comparative Example 1, a binding force between a current collector and a positive active material layer in a positive electrode was measured and the results are shown in Table 3 below.

The binding force was evaluated as follows. An upper surface of the positive electrode was bonded to a lower surface of a plastic plate (acryl resin, thickness: 5 mm) and a peeling test was performed thereon according to JIS K-6854 so as to measure peeling strength.

**Table 3**

| | Binding force of positive active material layer (gf/mm) |
|---|---|
| Example 1 | 4.7 |
| Comparative Example 1 | 2.9 |

Referring to Table 3, the positive active material layer of Example 1 has a higher binding force than the positive active material layer of Comparative Example 1.

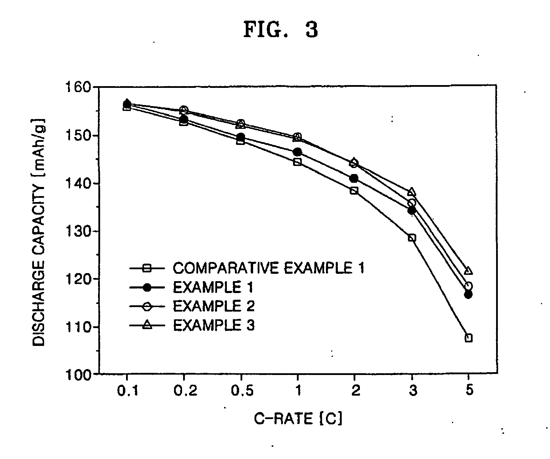

High-rate characteristics of lithium secondary batteries manufactured according to Examples 1 through 3 and Comparative Example 1 were evaluated, and the results are shown in FIG. 3.

The lithium secondary batteries manufactured according to Examples 1 through 3 and Comparative Example 1 were charged with a constant current (0.1C) and at a constant voltage (1.0V, 0.01C cut-off), and then rested for 10 minutes, and then, discharged with a constant current (0.1C, 0.2C, 0.5C, 1C, 2C, or 5C) until a voltage reached 2.5V. That is, a charge and discharge speed was 0.1C, 0.2C, 0.5C, 1C, 2C and 5C, and high-rate discharge characteristics of the lithium secondary batteries at the respective charge and discharge speeds were evaluated. The high-rate discharge characteristics are shown in FIG. 3.

In FIG. 3, the term 'C-rate' refers to a discharge rate of a cell, and the C-rate is obtained by dividing the total capacity of a cell by the total discharge time.

Referring to FIG. 3, it is confirmed that the lithium secondary batteries manufactured according to Examples 1 through 3 have better high-rate characteristics than the lithium secondary battery manufactured according to Comparative Example 1.

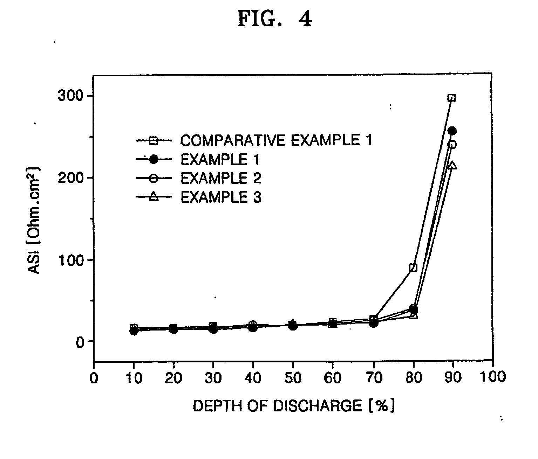

Interior resistance characteristics of the lithium secondary batteries manufactured according to Examples 1 through 3 and Comparative Example 1 were evaluated, and the results are shown in FIG. 4. In FIG. 4, the term 'depth of discharge' refers to a discharge rate, and for example, 100% of the depth of discharge means a full discharge state, and 0% of the depth of discharge means a full charge state. In FIG. 4, ASI is an abbreviation of area specific impedance.

The interior resistance characteristics are evaluated by measuring a current when two different voltages are applied to a cell and calculating a direct resistance from the current.

Referring to FIG. 4, it is confirmed that the lithium secondary batteries manufactured according to Examples 1 through 3 have lower interior resistance than the lithium secondary battery manufactured according to Comparative Example 1.

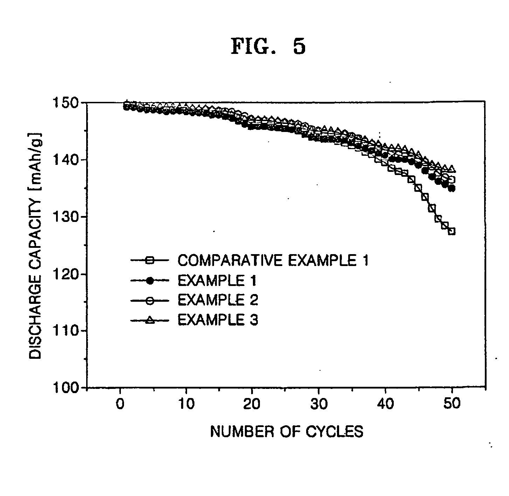

Lifetime characteristics of the lithium secondary batteries manufactured according to Examples 1 through 3 and Comparative Example 1 were evaluated, and the results are shown in FIG. 5.

Lifetime characteristics are evaluated as follows.

The lithium secondary batteries manufactured according to Examples 1 through 3 and Comparative Example 1 were charged with a constant current(1C) and at a constant voltage (1.0V, 0.01C cut-off), rested for 10 minutes, and discharged at a constant current (1C, room temperature (20° C), 2.5V cut-off), and this charging and discharging were repeatedly performed 500 times.

Lifetime characteristics of the respective lithium secondary batteries refer to a change in discharge capacity with respect to the number of charge and discharge cycles. Lifetime characteristics were evaluated and the results are shown in FIG. 5.

Referring to FIG. 5, it is confirmed that the lithium secondary batteries manufactured according to Examples 1 through 3 have better lifetime characteristics than the lithium secondary battery manufactured according to Comparative Example 1.

While certain embodiments have been described, those of ordinary skill in the art will understand that certain modification and changes to the described embodiments may be made without departing from the spirit and scope of the disclosure, as described in the appended claims.

## Claims

1. An electrode for a lithium rechargeable battery comprising an electrode active material and at least one polyurethane-based compound, wherein the electrode comprises pores having an average pore diameter of from 2 to 20 nm, wherein the polyurethane-based compound is produced by polymerising at least one diisocyanate compound and at least one polyoland the diisocyanate compound is an aliphatic diisocyanate compound, an alicyclic diisocyanate compound, an aromatic diisocyanate compound, or mixtures thereof;
wherein the aliphatic diisocyanate compound is preferably represented by the formula
O=C=N-R¹-N=C=O
in which R¹ is a substituted or unsubstituted straight-chain C₂₋₁₂ aliphatic hydrocarbon group, or a substituted or unsubstituted branched C₂₋₁₂ aliphatic hydrocarbon group;
wherein the alicyclic diisocyanate compound is preferably represented by the formula
O=C=N-R²-N=C=O
in which R² is a substituted or unsubstituted alicyclic hydrocarbon group with from 5 to 20 carbon atoms;
and wherein, for the substituted straight-chain aliphatic hydrocarbon group, substituted branched aliphatic hydrocarbon group, and substituted alicyclic hydrocarbon group, at least one hydrogen atom of the respective hydrocarbon group may be substituted by one or more groups selected from the group consisting of a halogen atom; a C₁-C₂₀ alkyl group substituted with a halogen atom, preferably a -CCF₃, -CHCF₂, CH₂F or -CCl₃ group; a C₁-C₂₀ alkoxy group; a C₂-C₂₀ alkoxyalkyl group; a hydroxy group; a nitro group; a cyano group; an amino group; an amidino group; a hydrazine group; a hydrazone group; a carboxyl group or salt thereof; a sulfonyl group; a suffamoyl group; a sulfonic acid group or salt thereof; a phosphoric acid group or salt thereof; a C₁-C₂₀ alkyl group; a C₂-C₂₀ alkenyl group; a C₂-C₂₀ alkynyl group; a C₁-C₂₀ heteroalkyl group; a C₆-C₂₀ aryl group; a C₆-C₂₀ arylalkyl group; a C₆-C₂₀ heteroaryl group; a C₇-C₂₀ heteroarylalkyl group; a C₆-C₂₀ heteroaryloxy group; a C₆-C₂₀ heteroaryloxyalkyl group; or a C₆-C₂₀ heteroarylalkyl group.

2. An electrode according to claim 1, wherein the aliphatic diisocyanate compound is selected from the group consisting of:
C₂-C₁₂ alkylene diisocyanates;
the alicyclic diisocyanate compound is selected from the group consisting of: 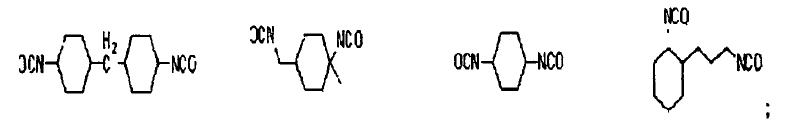 and the aromatic diisocyanate compound is selected from the group consisting of:

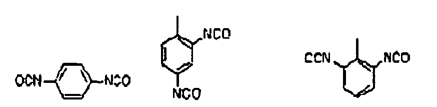

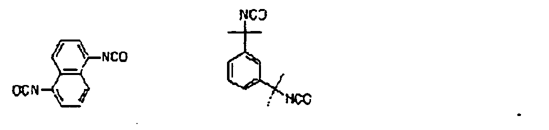

3. An electrode according to any of claims 1 to 2, wherein the at least one polyol has between 1 and 10 carbon atoms and between 2 and 6 hydroxyl groups, preferably between 1 and 6 carbon atoms and between 2 and 4 hydroxyl groups.

4. An electrode according to any of claims 1 to 3, wherein the polyurethane-based compound is a compound represented by: 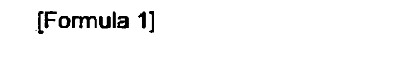 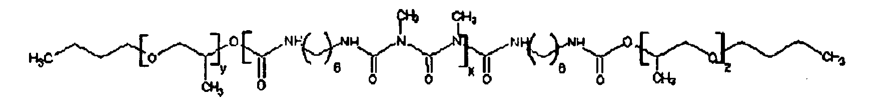 or 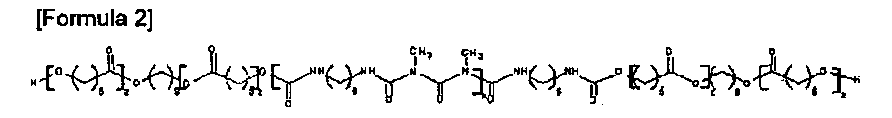 x is an integer of 1 to 100, preferably between 10 and 40, more preferably between 15 and 35;
y is an integer of 1 to 100, preferably between 5 and 30, more preferably between 10 and 25; and
z is an integer of 1 to 100 preferably between 5 and 20, more preferably between 7 and 15.

5. An electrode according to any of claims 1 to 4, wherein the electrode active material is a positive active material, preferably a lithium metal phosphate-based compound of formula LiMPO₄ where M is a metal selected from the group consisting of Fe, Ti, V, Cr, Co, and Ni.

6. An electrode according to any preceding claim, wherein the electrode further comprises a binder, preferably the binder is selected from the group consisting of polyvinylidenefluoride, polyvinylalcohol, carboxymethylcellulose(CMC), stanch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butadiene rubber, fluoro rubber, and vinylidenefluoride polymer and copolymer having at least one functional group selected from the group consisting of a carboxyl group, an epoxy group, a hydroxyl group, and a carbonyl group and mixtures thereof, and wherein the binder is preferably a mixture of a vinylidenefluoride polymer having at least one functional group selected from the group consisting of a carboxyl group, an epoxy group, a hydroxyl group and one of the other binders recited above, preferably polyvinylidenefluoride.

7. An electrode according to claim 6, wherein the binder is a mixture and wherein the vinylidenefluoride polymer having at least one functional group selected from the group consisting of a carboxyl group, an epoxy group, a hydroxyl group is present in the mixture in an amount of from 2 to 40 parts by weight, preferably from 3 to 10 parts by weight, based on 100 parts by weight of the total weight of the binder.

8. An electrode according to claim 6 or 7, wherein the binder is present in an amount of from 1 to 10 parts by weight based on 100 parts by weight of the total weight of the electrode active material.

9. An electrode according to any preceding claim, wherein the amount of polyurethane-based compound present is from 0.1 to 5 parts by weight based on 100 parts by weight of the electrode active material.

10. An electrode according to any preceding claim, wherein the electrode further comprises a conductive agent, preferably the amount of the polyurethane-based compound is from 1 to 50 parts by weight, preferably 10 to 50 parts by weight, based on 100 parts by weight of the conductive agent.

11. An electrode according to any preceding claim, comprising pores having an average pore diameter of 5 to 15 nm.

12. An electrode according to any preceding claim, wherein the pore volume is from 30 to 35 X 10⁻³ cm³/g, preferably from 32 to 33 X 10⁻³ cm³/g.

13. A lithium secondary battery comprising the electrode according to any preceding claim.

## Patentansprüche

1. Elektrode für eine wiederaufladbare Lithiumbatterie, umfassend ein aktives Elektrodenmaterial und mindestens eine Verbindung auf Polyurethanbasis, wobei die Elektrode Poren umfasst, die einen durchschnittlichen Porendurchmesser von 2 bis 20 nm aufweisen, wobei die Verbindung auf Polyurethanbasis durch Polymerisieren mindestens einer Diisocyanatverbindung und mindestens eines Polyols hergestellt wird und die Diisocyanatverbindung eine aliphatische Diisocyanatverbindung, eine alicyclische Diisocyanatverbindung, eine aromatische Diisocyanatverbindung oder Mischungen davon ist;
wobei die aliphatische Diisocyanatverbindung bevorzugt durch die Formel
O=C=N-R¹-N=C=O
dargestellt ist, wobei R¹ eine substituierte oder unsubstituierte, geradkettige, aliphatische C₂₋₁₂-Kohlenwasserstoffgruppe oder eine substituierte oder unsubstituierte, verzweigte, aliphatische C₂₋₁₂-Kohlenwasserstoffgruppe ist;
wobei die alicyclische Diisocyanatverbindung bevorzugt durch die Formel
O=C=N-R²-N=C=O
dargestellt ist, wobei R² eine substituierte oder unsubstituierte, alicyclische Kohlenwasserstoffgruppe mit 5 bis 20 Kohlenstoffatomen ist,
und wobei für die substituierte, geradkettige, aliphatische Kohlenwasserstoffgruppe, substituierte, verzweigte, aliphatische Kohlenwasserstoffgruppe und substituierte, alicyclische Kohlenwasserstoffgruppe mindestens ein Wasserstoffatom der jeweiligen Kohlenwasserstoffgruppe durch eine oder mehrere Gruppen substituiert sein kann ausgewählt aus der Gruppe bestehend aus einem Halogenatom; einer C₁-C₂₀-Alkylgruppe, die mit einem Halogenatom substituiert ist, bevorzugt einer -CCF₃-, -CHCF₂-, CH₂F- oder -CCl₃-Gruppe; einer C₁-C₂₀-Alkoxygruppe; einer C₂-C₂₀-Alkoxyalkylgruppe; einer Hydroxygruppe; einer Nitrogruppe; einer Cyanogruppe; einer Aminogruppe; einer Amidinogruppe; einer Hydrazingruppe; einer Hydrazongruppe; einer Carboxylgruppe oder einem Salz davon; einer Sulfonylgruppe; einer Sulfamoylgruppe; einer Sulfonsäuregruppe oder einem Salz davon; einer Phosphorsäuregruppe oder einem Salz davon; einer C₁-C₂₀-Alkylgruppe; einer C₂-C₂₀-Alkenylgruppe; einer C₂-C₂₀-Alkynylgruppe; einer C₁-C₂₀-Heteroalkylgruppe; einer C₆-C₂₀-Arylgruppe; einer C₆-C₂₀-Arylalkylgruppe; einer C₆-C₂₀-Heteroarylgruppe; einer C₇-C₂₀-Heteroarytalkylgruppe; einer C₆-C₂₀-Fleteroaryloxygzuppe; einer C₆-C₂₀-Heteroarylaxyalkylgruppe; oder einer C₆-C₂₀-Heteroarylalkylgruppe.

2. Elektrode nach Anspruch 1, wobei die aliphatische Diisocyanatverbindung aus der Gruppe ausgewählt ist bestehend aus:
C₂-C₁₂-Alkylendiisocyanaten;
die alicyclische Diisocyanatverbindung aus der Gruppe ausgewählt ist bestehend aus: 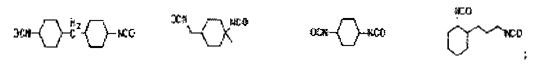 und die aromatische Diisocyanatverbindung aus der Gruppe ausgewählt ist bestehend aus:

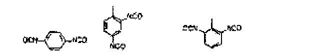

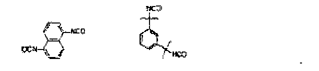

3. Elektrode nach einem der Ansprüche 1 bis 2, wobei das mindestens eine Polyol 1 bis 10 Kohlenstoffatome und 2 bis 6 Hydroxylgruppen, bevorzugt 1 bis 6 Kohlenstoffatome und 2 bis 4 Hydroxylgruppen aufweist.

4. Elektrode nach einem der Ansprüche 1 bis 3, wobei die Verbindung auf Polyurethanbasis eine Verbindung ist, die durch: 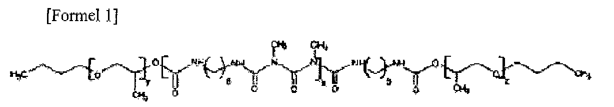 Oder 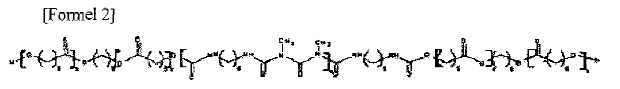 dargestellt ist
x eine ganze Zahl von 1 bis 100, bevorzugt zwischen 10 und 40, noch bevorzugter zwischen 15 und 35 ist;
y eine ganze Zahl von 1 bis 100, bevorzugt zwischen 5 und 30, noch bevorzugter zwischen 10 und 25 ist; und
z eine ganze Zahl von 1 bis 100, bevorzugt zwischen 5 und 20, noch bevorzugter zwischen 7 und 15 ist.

5. Elektrode nach einem der Ansprüche 1 bis 4, wobei das aktive Elektrodenmaterial ein positives aktives Material, bevorzugt eine Lithiummetallverbindung auf Pbosphatbasis der Formel LiMPO₄ ist, wobei M ein Metall ist ausgewählt aus der Gruppe bestehend aus Fe, Ti, V, Cr, Co und Ni.

6. Elektrode nach einem der vorhergehenden Ansprüche, wobei die Elektrode des Weiteren ein Bindemittel umfasst, wobei das Bindemittel bevorzugt aus der Gruppe ausgewählt ist bestehend aus Polyvinylidenfluorid, Polyvinylalkohol, Carboxymethylcellulose (CMC), Stärke, Hydroxypropylcellulose, regenerierter Cellulose, Polyvinylpyrrolidon, Tetrafluorethylen, Polyethylen, Polypropylen, Ethylen-Propylen-Dien-Terpolymer (EPDM), sulfoniertem EPDM, Styrol-Butadien-Kautschuk, Fluorkautschuk und Vinylidenfluorpolymer und -Copolymer, die eine funktionelle Gruppe aufweisen ausgewählt aus der Gruppe bestehend aus einer Carboxylgruppe, einer Epoxygruppe, einer Hydroxylgruppe und einer Carbonylgruppe und Mischungen davon und wobei das Bindemittel bevorzugt eine Mischung von einem Vinylidenpolymer, das mindestens eine funktionelle Gruppe aufweist ausgewählt aus der Gruppe bestehend aus einer Carboxylgruppe, einer Epoxygruppe, einer Hydroxylgruppe, und einem der anderen oben aufgefühlten Bindemittel, bevorzugt Polyvinylfluorid, ist.

7. Elektrode nach Anspruch 6, wobei das Bindemittel eine Mischung ist und wobei das Vinylidenfluridpolymer, das mindestens eine funktionelle Gruppe aufweist ausgewählt aus der Gruppe bestehend aus einer Carboxylgruppe, einer Epoxygruppe, einer Hydroxylgruppe, in der Mischung in einer Menge von 2 bis 40 Gewichtsteilen, bevorzugt 3 bis 10 Gewichtsteilen, auf 100 Gewichtsteile des Gesamtgewichts des Bindemittels bezogen, vorliegt.

8. Elektrode nach Anspruch 6 oder 7, wobei das Bindemittel in einer Menge von 1 bis 10 Gewichtsteilen, auf 100 Gewichtsteile des Gesamtgewichts des aktiven Elektrodenmaterials bezogen, vorliegt.

9. Elektrode nach einem der vorhergehenden Ansprüche, wobei die Menge der vorliegenden Verbindung auf Polyurethanbasis 0,1 bis 5 Gewichtsteile, auf 100 Gewichtsteile des aktiven Elektrodenmaterials bezogen, beträgt.

10. Elektrode nach einem der vorhergehenden Ansprüche, wobei die Elektrode des Weiteren ein leitfähiges Mittel umfasst, wobei bevorzugt die Menge der Verbindung auf Polyurethanbasis 1 bis 50 Gewichtsteile, bevorzugt 10 bis 50 Gewichtsteile, auf 100 Gewichtsteile des leitfähigen Mittels bezogen, beträgt.

11. Elektrode nach einem der vorhergehenden Ansprüche, die Poren umfasst, die einen durchschnittlichen Porendurchmesser von 5 bis 15 nm aufweisen.

12. Elektrode nach einem der vorhergehenden Ansprüche, wobei das Porenvolumen 30 bis 35 x 10⁻³ cm³/g, bevorzugt 32 bis 33 x 10⁻³ cm³/g beträgt.

13. Lithiumsekundärbatterie umfassend die Elektrode nach einem der vorhergehenden Ansprüche.

## Revendications

1. Électrode pour une pile rechargeable au lithium comprenant un matériau actif d'électrode et au moins un composé à base de polyuréthane, dans laquelle l'électrode comprend des pores ayant un diamètre moyen de pore de 2 à 20 nm, dans laquelle le composé à base de polyuréthane est produit par polymérisation d'au moins un composé diisocyanate et d'au moins un polyol et le composé diisocyanate est un composé diisocyanate aliphatique, un composé diisocyanate alicyclique, un composé diisocyanate aromatique, ou des mélanges de ceux-ci;
dans laquelle le composé diisocyanate aliphatique est de préférence représenté par la formule
O=C=N-R¹-N=C=O
dans laquelle R¹ est un groupe hydrocarbure aliphatique en C₂ à C₁₂ substitué ou non substitué à chaîne linéaire, ou un groupe hydrocarbure aliphatique en C₂ à C₁₂ substitué ou non substitué, ramifié;
dans laquelle le composé diisocyanate alicyclique est de préférence représenté par la formule
O=C=N-R²-N=C=O
dans laquelle R² est un groupe hydrocarbure alicyclique substitué ou non substitué avec de 5 à 20 atomes de carbone;
et dans laquelle, pour le groupe hydrocarbure aliphatique substitué à chaîne linéaire, le groupe hydrocarbure aliphatique substitué à chaîne ramifiée, et le groupe hydrocarbure alicyclique substitué, au moins un atome d'hydrogène du groupe hydrocarbure respectif peut être substitué par un ou plusieurs groupe(s) sélectionné(s) parmi le groupe constitué d'un atome d'halogène; d'un groupe alkyle en C₁ à C₂₀ substitué par un atome d'halogène, de préférence un groupe -CCF₃, -CHCF₂, CH₂F ou - CCl₃; d'un groupe alcoxy en C₁ à C₂₀; d'un groupe alcoxyalkyle en C₂ à C₂₀; d'un groupe hydroxy; d'un groupe nitro; d'un groupe cyano; d'un groupe amino; d'un groupe amidino; d'un groupe hydrazine; d'un groupe hydrazone; d'un groupe carboxyle ou d'un sel de celui-ci; d'un groupe sulfonyle; d'un groupe sulfamoyle; d'un groupe acide sulfonique ou d'un sel de celui-ci; d'un groupe acide phosphorique ou d'un sel de celui-ci; d'un groupe alkyle en C₁ à C₂₀; d'un groupe alcényle en C₂ à C₂₀; d'un groupe alcynyle en C₂ à C₂₀; d'un groupe hétéroalkyle en C₁ à C₂₀; d'un groupe aryle en C₆ à C₂₀; d'un groupe arylalkyle en C₆ à C₂₀; d'un groupe hétéroaryle en C₆ à C₂₀; d'un groupe hétéroarylalkyle en C₇ à C₂₀; d'un groupe hétéroaryloxy en C₆ à C₂₀; d'un groupe hétéroaryloxyalkyle en C₆-C₂₀; ou d'un groupe hétéroarylalkyle en C₆ à C₂₀.

2. Électrode selon la revendication 1, dans laquelle le composé diisocyanate aliphatique est sélectionné parmi le groupe constitué de:
diisocyanates d'alkylène en C₂ à C₁₂;
le composé diisocyanate alicyclique est sélectionné parmi le groupe constitué de: 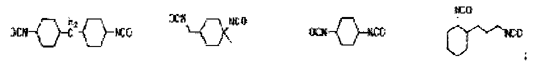 et le composé diisocyanate aromatique est sélectionné parmi le groupe constitué de:

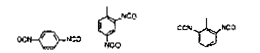

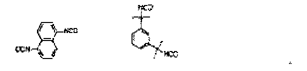

3. Électrode selon l'une quelconque des revendications 1 à 2, dans laquelle le au moins un polyol a entre 1 et 10 atome(s) de carbone et entre 2 et 6 groupes hydroxyle, de préférence entre 1 et 6 atome(s) de carbone et entre 2 et 4 groupes hydroxyle.

4. Électrode selon l'une quelconque des revendications 1 à 3, dans laquelle le composé à base de polyuréthane est un composé représenté par: 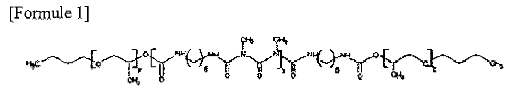 ou 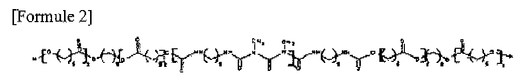 x est un nombre entier d'une valeur de 1 à 100, de préférence entre 10 et 40, plus préférablement entre 15 et 35;
y est un nombre entier d'une valeur de 1 à 100, de préférence entre 5 et 30, plus préférablement entre 10 et 25; et
z est un nombre entier d'une valeur de 1 à 100, de préférence entre 5 et 20, plus préférablement entre 7 et 15.

5. Électrode selon l'une quelconque des revendications 1 à 4, dans laquelle le matériau actif d'électrode est un matériau actif positif, de préférence un composé à base de phosphate de métal-lithium de formule LiMPO₄ où M est un métal sélectionné parmi le groupe constitué de Fe, Ti, V, Cr, Co, et Ni.

6. Électrode selon l'une quelconque des revendications précédentes, dans laquelle l'électrode comprend en outre un liant, de préférence le liant est sélectionné parmi le groupe constitué du poly(fluorure de vinylidène), du poly(alcool de vinyle), de la carboxyméthylcellulose (CMC), de l'amidon, de l'hydzoxypropylcellulose, de la cellulose régénérée, de la polyvinylpyrrolidone, du tétrafluoroéthylène, du polyéthylène, du polypropylène, du terpolymère d'éthylène-propylène-diène (EPDM), de l'EPDM sulfoné, du caoutchouc de styrène-butadiène, du caoutchouc fluoré, et du polymère de fluorure de vinylidène et du copolymère ayant au moins un groupe fonctionnel sélectionné parmi le groupe constitué d'un groupe carboxyle, d'un groupe époxy, d'un groupe hydroxyle, et d'un groupe carbonyle et de leurs mélanges, et dans laquelle le liant est de préférence un mélange d'un polymère de fluorure de vinylidène ayant au moins un groupe fonctionnel sélectionné parmi le groupe constitué d'un groupe carboxyle, d'un groupe époxy, d'un groupe hydroxyle et de l'un des autres liants énoncés ci-dessus, de préférence du poly(fluorure de vinylidène).

7. Électrode selon la revendication 6, dans laquelle le liant est un mélange et dans laquelle le polymère de fluorure de vinylidène ayant au moins un groupe fonctionnel sélectionné parmi le groupe constitué d'un groupe carboxyle, d'un groupe époxy, d'un groupe hydroxyle est présent dans le mélange en une quantité de 2 à 40 parties en poids, de préférence de 3 à 10 parties en poids, sur la base de 100 parties en poids du poids total du liant.

8. Électrode selon la revendication 6 ou 7, dans laquelle le liant est présent en une quantité de 1 à 10 partie(s) en poids sur la base de 100 parties en poids du poids total du matériau actif d'électrode.

9. Électrode selon l'une quelconque des revendications précédentes, dans laquelle la quantité de composé à base de polyuréthane présent est de 0,1 à 5 partie(s) en poids sur la base de 100 parties en poids du matériau actif d'électrode.

10. Électrode selon l'une quelconque des revendications précédentes, dans laquelle l'électrode comprend en outre un agent conducteur, de préférence la quantité du composé à base de polyuréthane est de 1 à 50 partie(s) en poids, de préférence 10 à 50 parties en poids, sur la base de 100 parties en poids de l'agent conducteur.

11. Électrode selon l'une quelconque des revendications précédentes, comprenant des pores ayant un diamètre moyen de pore de 5 à 15 nm.

12. Électrode selon l'une quelconque des revendications précédentes, dans laquelle le volume des pores est de 30 à 35 x 10⁻³ cm³/g, de préférence de 32 à 33 x 10⁻³ cm³/g.

13. Pile secondaire au lithium comprenant l'électrode selon l'une quelconque des revendications précédentes.
